# EUROPÄISCHE PATENTANMELDUNG

(11) **EP 1 398 655 A1**
(43) Veröffentlichungstag der Anmeldung: **17.03.2004**
(21) Anmeldenummer: 02020046.5
(22) Anmeldetag: 06.09.2002
(51) Int. Cl.: G02B 7/00, H04N 1/113

(54) **Temperierung eines Optikmoduls**

(71) Anmelder: Agfa-Gevaert AG, 51373 Leverkusen (DE)
(72) Erfinder: Nebosis, Rainer, 81541 München (DE)

(57) **Zusammenfassung**

Zur Vermeidung von Farbsäumen in Hochgeschwindigkeitsrekordern für digitale Farbbilder eignet sich am besten ein passiv stabiles optisches System, dessen Temperatur aktiv geregelt wird. Zur aktiven Temperaturregelung sind Peltier-Elemente (14) als Stellglieder gut geeignet. Mit ihnen lassen sich sowohl die Komponenten als auch das Gehäuse (10) des Optikmoduls (1) eines Hochgeschwindigkeits-Rekorders für eine rasche Temperaturstabilisierung sowohl heizen als auch kühlen. Das gesamte Design des Moduls (1) sollte jedoch auf den Einsatz der Peltier-Elemente (14) abgestimmt sein.

## Beschreibung

Die vorliegende Erfindung betrifft ein Optikmodul zum Belichten eines Bildaufnahmeelements sowie ein Verfahren zum Betreiben eines Optikmoduls für ein Belichten eines Bildaufnahmeelements nach dem Oberbegriff der Ansprüche 1, 2, und 10.

Optikmodule werden beispielsweise zur digitalen Belichtung von Fotopapier eingesetzt. Dazu werden drei Laserstrahlen mit hoher Geschwindigkeit über Fotopapier gelenkt und das Papier in senkrechter Richtung dazu vorwärts bewegt. Das Fotopapier wird hierbei mit drei Farben belichtet. Durch die schnelle Modulation der Lichtleistung während des Schreibvorgangs wird die Bildinformation aufgebracht.

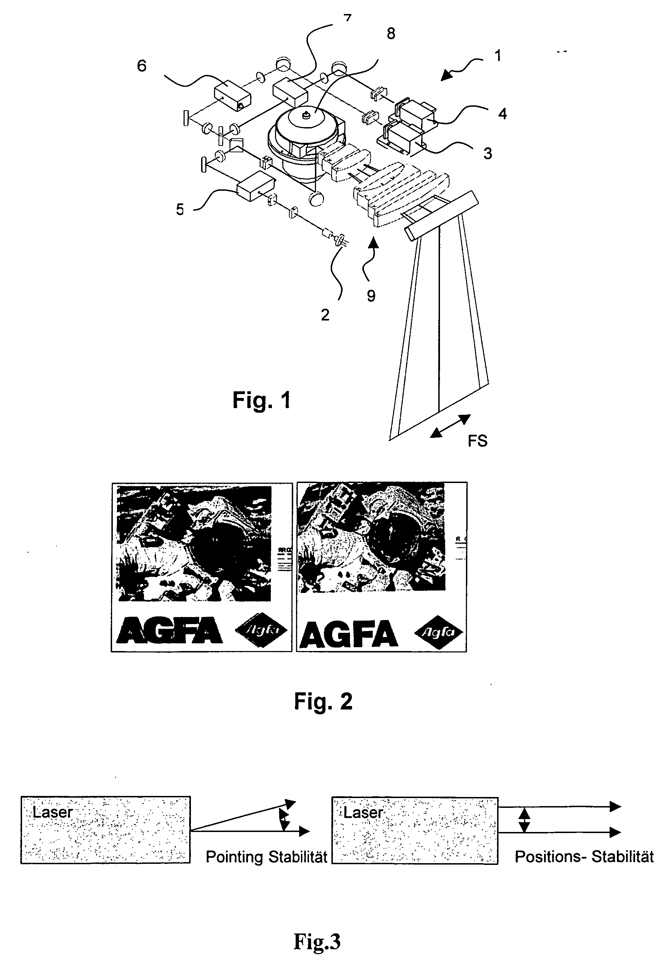

Figur 1 zeigt beispielhaft die Komponenten eines derartigen Optikmoduls 1 in perspektivischer Ansicht. Als Lichtquelle ist ein roter Laser 2, ein grüner Laser 3 und ein blauer Laser 4 vorgesehen. Jedem Laser folgt zur Strahlformung neben Spiegeln und Linsen ein akusto-optischer Modulator (AOM) 5, 6 und 7 auf piezoelektrischer Basis. Dieser Modulator 5, 6, 7 dient zur schnellen kontinuierlichen Modulation der Lichtleistung in den einzelnen Farbkanälen. Anschließend werden die drei Strahlen überlagert und mit einem rotierenden Spiegelrad (Polygon-Scanner) 8 abgelenkt. Eine nachfolgende Optik 9 bildet die Laserstrahlen scharf auf die Bildebene ab.

Derartige Optikmodule sollen in Hochleistungsbelichtern eingesetzt werden, die z B. zum Belichten von Fotopapier in fotografischen Großlaboren verwendet werden. Um an die 20000 Bilder pro Stunde belichten zu können muss die Geschwindigkeit der Belichtung sehr hoch sein. Wegen der sehr hohen Belichtungsgeschwindigkeit muss der Polygon-Scanner 8 bei sehr hohen Drehzahlen betrieben werden (30000 bis 40000 rpm). Auf Grund der Motorleistung und der Reibung des Polygonspiegels mit der umgebenden Luft entsteht erhebliche Abwärme, die das Modul 1 aufheizt.

Die drei Laserstrahlen müssen exakt überlagert werden, um Störungen, z. B. bei schwarzem Text oder schwarzen Kanten zu vermeiden. In der linken Hälfte von Figur 2 ist ein Bild dargestellt, bei dem die Überlagerung der Laserstrahlen qualitativ schlecht ist. Das in der Figur unscharf erscheinende Bild hat insbesondere an den Kanten störenden Farbsäume. Demgegenüber ist das Bild in der rechten Hälfte von Figur 2 durch exakte Überlagerung der Laserstrahlen entstanden. Farbsäume, insbesondere an den Kanten, sind nicht zu erkennen.

Die Farbüberlagerung in Fast-Scan-Richtung FS, die in Figur 1 angedeutet ist, erfolgt auf elektronischem Weg. In der dazu senkrechten Richtung (Slow-Scan) erfolgt die Farbüberlagerung durch optische Überlagerung der Laserstrahlen. Damit während des Betriebs keine Farbränder entstehen, dürfen sich die Strahlpositionen in den einzelnen Farbkanälen nicht relativ zueinander verändern. Dies bedeutet, dass weder in Slow- noch in Fast-Scan-Richtung Änderungen in der Strahlposition zulässig sind. Dabei ist eine Langzeitstabilität notwendig, die einen relativen Strahlabstand auf dem Fotopapier von kleiner 10 µm zwischen allen drei Farben garantiert. Außerdem muss das Modul 1 gegen Schwankungen der Umgebungstemperatur von 15° C bis 35° C unempfindlich sein.

Die Stabilität der Farbüberlagerung wird durch verschiedene Komponenten und Umgebungsbedingungen bestimmt. Unter anderem sind dies:
- die Stabilität der Laser selbst
- die Stabilität der optischen Komponenten
- die mechanische Stabilität des Aluminiumgusskörpers des Optikmoduls und
- die Umgebungstemperatur und die Temperatur des Optikmoduls.

Verschiedene Komponenten des Optikmoduls 1, insbesondere der grüne und der blaue Laser 3, 4, besitzen eine maximal zulässige Betriebstemperatur. Wird diese Temperatur überschritten, so ist deren fehlerfreie Funktion nicht mehr gewährleistet. Für Laser, die in Optikmodulen eingesetzt werden, liegt diese Temperatur typischerweise bei 40°C.

Der Polygonspiegel bringt bei Drehzahlen über 30000 rpm je nach Bauart etwa 50 W bis 70 W Wärmeleistung in das Modul 1 ein. Er würde sich ungekühlt nach kurzer Zeit auf über 50° C erwärmen.

Bei Luftkühlung und entsprechenden Kühlkörpern müsste ein Wärmewiderstand von 0,07 K/W realisiert werden, um eine Erwärmung über 40° C zu verhindern. Dieser Wert ist nur bei luftdurchströmten Hochleistungskühlkörpern zu realisieren, nicht jedoch bei einem Optikmodul.

Eine typische Spezifikation für die Stabilität von Lasern in luftgekühlten Systemen lautet: Pointing-Stabilität: 4 µ rad pro ° C; Positionsstabilität: 1 µm pro° C bei 100 µm Strahldurchmesser. Anhand von Figur 3 lässt sich die sogenannte Pointing-Stabilität und die Positions-Stabilität erklären. Die Pointing-Stabilität bezieht sich auf einen Winkelversatz des Laserstrahls, der sich bei einer Temperaturänderung des Lasers ergibt. Demgegenüber bezeichnet die Positions-Stabilität eine Parallelverschiebung des Laserstrahls auf Grund von Temperaturschwankungen.

Beispielsweise bei einer Änderung der Umgebungstemperatur um 20°C würden sich entsprechend dieser typischen Spezifikation ohne Temperierung eine Winkelabweichung von 80 µ rad und eine Parallelabweichung von 20 µm ergeben. Dies würde in einem Gesamtsystem beispielsweise zu einem Farbfehler von ca. 60 µm führen, wenn der blaue Laser nach unten und der grüne Laser nach oben driften. Diese nicht akzeptable Instabilität des Strahls tritt auf, obwohl Teile des Lasers intern auf konstanter Temperatur gehalten werden. Die Ursache hierfür liegt beispielsweise in der thermischen Ausdehnung von Haltern, die nicht temperiert sind. Eine Luftkühlung des Polygonspiegels 8 alleine oder des Optikmoduls 1 ist daher nicht ausreichend. Für geringere Drehzahlen aber stellt die Luftkühlung sicherlich eine Alternative zu anderen Kühlmethoden dar.

Ein weiteres Problem der Luftkühlung besteht darin, dass durch das Aufwirbeln von Papierstaub, der mit der Luftströmung zum Modul geführt wird, die Optik 9 verschmutzt wird. Derartiger Papierstaub entsteht beim Transport, Stanzen und Schneiden des Papiers während des Fotoherstellungsprozesses. Insgesamt kann festgestellt werden, dass die Kühlung des Moduls 1 mit vorgekühlter Luft einen verhältnismäßig hohen Aufwand darstellt und nur eine ungenaue Temperierung des Moduls 1 gestattet.

Ein derartiges luftgekühltes Optikmodul ist aus der japanischen Patentanmeldung mit der Veröffentlichungsnummer JP-A-2000206627 bekannt. Dort besitzt das beschriebene Belichtungsgerät an seiner Unterseite Kühlrippen, die in verschiedenen Richtungen orientiert sind. Die Rippen werden von einem Gebläse mit Kühlluft versorgt.

Bei Kühlung mit einer Kühlflüssigkeit, die mit einem externen Kühler (Wärmetauscher) gekühlt wird, kann eine wesentlich höhere Kühleffizienz erreicht werden als bei Luftkühlung. Der Gusskörper des Optikmoduls muss hierfür doppelwandig ausgeführt werden oder mit Röhren durchzogen sein, ähnlich wie die Kühlfläche eines Kühlschranks.

Durch den guten thermischen Kontakt der Kühlflüssigkeit zum Optikmodul und der großen Wärmekapazität der Kühlflüssigkeit stellt sich eine Modultemperatur ein, die weniger stark von der Umgebungstemperatur abhängt als bei Luftkühlung.

Auch Verschmutzungen durch Staub werden bei dieser Art der Kühlung vermieden. Der technische Aufwand einer Flüssigkühlung für ein Optikmodul ist jedoch äußerst hoch und die Realisierung sehr teuer. Eine aktive Steuerung der Modultemperatur kann nur über eine Durchflussregelung der Kühlflüssigkeit erfolgen. Außerdem ist ein Aufwärmen des Moduls mit dieser Technik nicht möglich. Dies bedeutet, dass es nach Einschalten des Geräts sehr lange dauern kann, bis das gesamte Modul in einem thermisch stabilen Zustand ist.

Ein entsprechendes flüssigkeitsgekühltes Optikmodul ist in der japanischen Patentanmeldung mit der Veröffentlichungsnummer JP-A-08122683 beschrieben. Kühlflüssigkeit ist in die doppelwandige Ummantelung des Optikmoduls eingefüllt. Die Kühlflüssigkeit wird innerhalb der Wände umgewälzt und ein externes Kühlaggregat sorgt für die entsprechende Kühlung.

Die Aufgabe der vorliegenden Erfindung besteht darin, ein Optikmodul und ein Verfahren zum Betreiben eines Optikmoduls vorzuschlagen, mit denen einerseits eine effiziente Kühlung der Komponenten des Optikmoduls und zum anderen eine rasche thermische Stabilisierung erreicht werden kann.

Gelöst wird diese Aufgabe gemäß der Erfindung durch ein Optikmodul mit den Merkmalen von Anspruch 1 bzw. 2 und ein Verfahren mit den Merkmalen von Anspruch 10.

Erfindungsgemäß wird diese Aufgabe gelöst durch ein Optikmodul zum Belichten eines Bildaufnahmeelements mit mindestens einer zu heizenden und/oder zu kühlenden Lichtquelleneinrichtung, mindestens einer zu heizenden und/oder zu kühlenden Strahlformungseinrichtung, die mit der mindestens einen Lichtquelleneinrichtung in optischem Kontakt steht, und einer mit der mindestens einen Lichtquelleneinrichtung und der mindestens einen Strahlformungseinrichtung in Wärmetransportverbindung stehenden Wärmetransporteinrichtung, wobei die Wärmetransporteinrichtung eine Wärmepumpeneinrichtung umfasst.

Ferner wird die obige Aufgabe erfindungsgemäß gelöst durch ein Optikmodul zum Belichten eines Bildaufnahmeelements mit einem wärmeleitfähigen Gehäuse, mindestens einer zu heizenden und/oder zu kühlenden Optikeinrichtung, die in dem Gehäuse angeordnet ist und mit diesem in Wärmetransportverbindung steht, und einer mit dem Gehäuse in Wärmetransportverbindung stehenden Wärmetransporteinrichtung, mit der die mindestens eine Optikeinrichtung über das Gehäuse indirekt heizbar und/oder kühlbar ist, wobei die Wärmetransporteinrichtung eine Wärmepumpeneinrichtung umfasst.

Ferner ist erfindungsgemäß vorgesehen ein Verfahren zum Betreiben eines Optikmoduls mit mindestens einer zu heizenden und/oder zu kühlenden Lichtquelleneinrichtung und mindestens einer zu heizenden und/oder zu kühlenden Strahlformungseinrichtung, die mit der mindestens einen Lichtquelleneinrichtung in optischem Kontakt steht, für ein Belichten eines Bildaufnahmeelements durch Transportieren von Wärme gemeinsam zu der mindestens einen Lichtquelleneinrichtung und mindestens einen Strahlformungseinrichtung hin oder von ihnen weg, wobei das Transportieren der Wärme aktiv durch eine Wärmepumpe unterstützt wird.

Darüber hinaus wird gemäß der vorliegenden Erfindung bereitgestellt ein Verfahren zum Betreiben eines Optikmoduls mit einem wärmeleitfähigen Gehäuse und mindestens einer zu heizenden und/oder zu kühlenden Optikeinrichtung, die in dem Gehäuse angeordnet ist und mit diesem in Wärmetransportverbindung steht, für ein Belichten eines Bildaufnahmeelements durch Transportieren von Wärme zu dem Gehäuse hin oder von ihm weg, so dass die mindestens eine Optikeinrichtung über das Gehäuse indirekt geheizt und/oder gekühlt wird,
wobei das Transportieren der Wärme aktiv durch eine Wärmepumpeneinrichtung unterstützt wird.

Die Wärmepumpeneinrichtung ist dabei vorzugsweise nach einem thermoelektrischen Prinzip betreibbar. Insbesondere umfasst die Wärmepumpeneinrichtung eines oder mehrere Peltier-Elemente. Damit ist es möglich, elektrisch gesteuert den gewünschten Komponenten des Optikmoduls Wärme mit einer definierten lokalen Intensität zuzuführen oder zu entziehen.

Eine Wärmeleitungsverbindung kann zwischen den zu kühlenden und/oder zu heizenden Einrichtungen und der Wärmepumpe bestehen. Damit ist es möglich, mehrere Komponenten des Optikmoduls mit einer einzigen Wärmepumpe zu kühlen und/oder zu heizen.

Die Wärmetransporteinrichtung umfasst vorzugsweise eine Regeleinrichtung zum Regeln der Temperatur der zu kühlenden und/oder zu heizenden Einrichtung. Damit soll erreicht werden, dass die Komponenten des Optikmoduls von Beginn des Betriebs an auf einer konstanten Temperatur gehalten werden.

Die Komponenten der Wärmepumpeneinrichtung sollten in dem Optikmodul derart verteilt sein, dass in ihm isotherme Bereiche erzeugt werden können. Empfindliche Komponenten des Optikmoduls können dann in diesen isothermen Bereichen angeordnet werden, so dass sie untereinander nicht unterschiedlich auf Schwankungen der Umgebungstemperatur reagieren.

Jede der mindestens einen Lichtquelleneinrichtungen kann einen Laser und insbesondere eine Laserdiode umfassen. Darüber hinaus kann die genannte Strahlformungseinrichtung mit einfachen Spiegeln und Linsen auch einen Polygonspiegel zum Scannen eines Bildaufnahmeelements, z. B. eines Fotopapiers umfassen. Mit diesem Polygonspiegel lassen sich sehr hohe Abtastgeschwindigkeiten erreichen.

Die vorliegende Erfindung wird nun anhand der beigefügten Zeichnungen näher erläutert, in denen zeigen:
- Fig. 1: eine perspektivische Ansicht der Anordnung der optischen Komponenten in einem Optikmodul nach dem Stand der Technik;
- Fig.2: eine vergleichende Darstellung von Bildern mit guter und schlechter Strahlüberlagerung;
- Fig.3: eine Prinzipskizze zu den unterschiedlichen Möglichkeiten von Strahlinstabilitäten;
- Fig. 4: eine perspektivische Ansicht eines Optikmoduls und eine schematische Seitenansicht; und
- Fig. 5: eine Temperaturverteilung in einem Optikmodul und eine Draufsicht auf ein Optikmodul.

Das nachfolgend beschriebene Ausführungsbeispiel stellt eine bevorzugte Ausführungsform der vorliegenden Erfindung dar. Bei der Kühlung mit Peltier-Elementen, die auch als Thermo-Electric-Cooler (TEC) bezeichnet werden, kann eine aktive Regelung der Temperatur des Optikmoduls erreicht werden. Dabei wird ausgenutzt, dass ein TEC sowohl heizen als auch kühlen kann. Je nach Polarität des Stroms durch den TEC erwärmt sich die eine Seite des TECs und die andere kühlt ab oder umgekehrt. Ein oder mehrere Temperatursensoren registrieren die aktuelle Modultemperatur und dienen als Ist-Wert eines Regelkreises, der die TECs bestromt. Dadurch kann beim Einschalten des Geräts sehr schnell ein stabiler thermischer Zustand erreicht werden und dieser Zustand wird auch bei veränderten Umgebungsbedingungen stabil beibehalten.

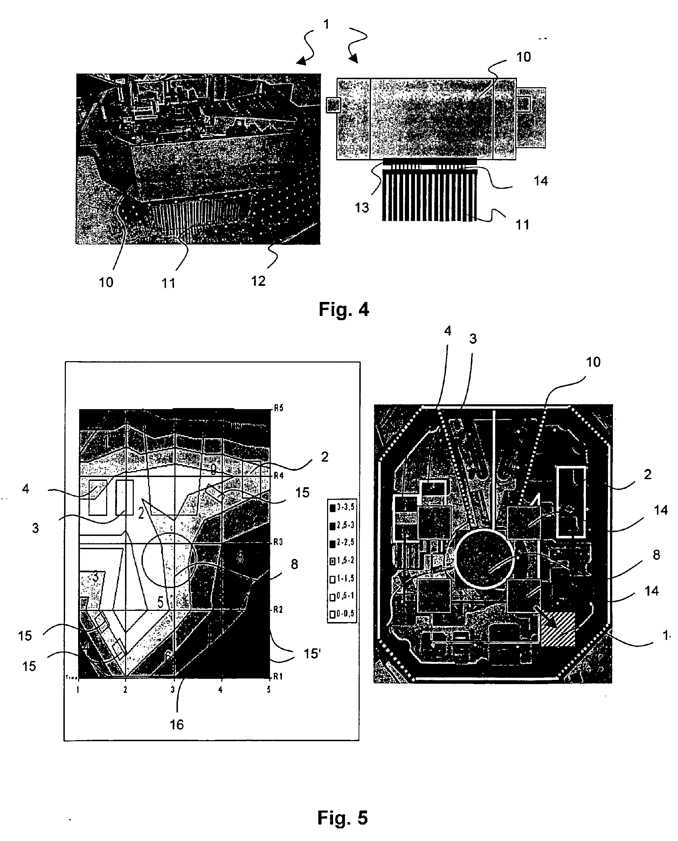

Figur 4 zeigt in der linken Hälfte eine Fotographie eines Optikmoduls. In einem Gehäuse 10 aus Aluminiumguss sind die einzelnen optischen Komponenten untergebracht. Der Deckel des Gehäuses 10 ist hier abgenommen. Unterhalb des Gehäuses 10 ist ein Kühlkörper 11 zu sehen. Dieser ist in Wärmekontakt mit der Umgebungs- oder Kühlluft.

In der rechten Hälfte von Figur 4 ist eine Seitenansicht des Optikmoduls 1 wiedergegeben. An der Bodenunterseite des Gehäuses 10 befindet sich eine temperierte Platte 13 und darunter der Kühlkörper 11. Zwischen dem Kühlkörper 11 und der temperierten Platte 13 befinden sich ein oder mehrere TECs beziehungsweise Peltier-Elemente 14. Zwischen dem Gehäuse 10, der temperierten Platte 13, den Peltier-Elementen 14 und dem Kühlkörper 11 bestehen jeweils gute thermische Kontakte. Die TECs können elektrisch in Serie, parallel oder einzeln angesteuert betrieben werden.

Wesentlich für die Funktionaliät ist nicht nur das Erreichen einer konstanten Temperatur, sondern auch die Homogenität der Temperatur im Modul. Hierbei sind zwei unterschiedliche Betriebsmodi zu beachten:
- niedrige Umgebungs- beziehungsweise Gerätetemperatur, z. B. 20° C: Die TECs müssen heizen, um eine gewünschte Betriebstemperatur zu erreichen.
- hohe Umgebungs- beziehungsweise Gerätetemperatur, z. B. 40° C: Die TECs müssen kühlen, um die gewünschte Betriebstemperatur zu erreichen.

Bei einer Temperaturschwankung von beispielsweise 20° C auf 40° C entstehen im Optikmodul unterschiedliche Temperaturgradienten. Dies kann dazu führen, dass die einzelnen Optikkomponenten im Optikmodul 1 während einer Änderung der Umgebungstemperatur unterschiedliche individuelle Temperaturänderungen erfahren. Das hat zur Folge, dass sich die Komponenten gegeneinander verstimmen und entsprechende Farbsäume auftreten. Diese Farbsäume können größtenteils dadurch verhindert werden, dass die empfindlichsten Komponenten auf einer isothermen Fläche in dem Optikmodul angeordnet werden. Um dies zu erreichen, müssen die Wärmequellen und -senken in dem Optikmodul entsprechend angeordnet werden. Es sollte sich dann eine Anordnung ergeben, bei der die empfindlichsten Komponenten um die Wärmequelle angeordnet sind und die TECs mit geeigneter Symmetrie positioniert werden. Wird nur ein Temperatursensor eingesetzt, so sollte er im Bereich dieser isothermen Fläche angeordnet werden.

Figur 5 zeigt in der linken Hälfte hierzu Temperaturverläufe, wie sie sich bei einer Schwankung der Umgebungstemperatur von 20° C auf 40° C in dem Optikmodul einstellen. Je heller die Bereiche sind, desto weniger ändert sich die Temperatur bei der vorgegebenen Temperaturregelung. In dieses Temperaturverlaufsdiagramm sind die Laser 2, 3, 4, der Polygonspiegel 8 und die wichtigsten Spiegel 15 eingezeichnet. Aus der Darstellung ist zu erkennen, dass die Laser 2, 3, 4 und die meisten Spiegel 15 annähernd auf Isothermen angeordnet sind. Die Anordnung der TECs ist in der rechten Hälfte von Figur 5, die eine fotographische Draufsicht auf den Gehäuseboden des Optikmoduls 1 darstellt, angedeutet. Sie sind symmetrisch zu dem Polygonspiegel 8 positioniert.

Aus der linken Hälfte von Figur 5 ist jedoch zu erkennen, dass ein sogenannter Beam-Combiner 16 und weitere Spiegel 15' nicht zusammen mit den anderen optischen Komponenten auf einer isothermen Fläche angeordnet sind. Daher ist es notwendig, die hellgrauen Bereiche in der Graphik nach rechts unten auszubreiten, bis der Beam-Combiner 16 und die Spiegel 15' ebenso auf einer isothermen Fläche liegen. Dies lässt sich dadurch erreichen, dass das rechte untere TEC 14 auf die Position 14' verschoben wird. Damit kann der lateralen Wärmeleitfähigkeit des Moduls besser Rechnung getragen werden.

Die Vorteile der aktiven Kühlung sind, dass die Laser im vorliegenden Fall bei einer Temperaturänderung der Umgebung um 20° C nur um ca. 1° C erwärmt beziehungsweise gekühlt werden. Dadurch beträgt der durch die Laser verursachte Farbsaum nicht 60 µm, sondern lediglich 3 µm. Außerdem wird sichergestellt, dass jede Komponente deutlich unterhalb ihrer kritischen Temperatur betrieben wird.

Zusätzlich zu den Lasern 2, 3, 4 sind - wie bereits erwähnt - auch andere Komponenten, z. B. Beam-Combiner 16, Zylinderlinsen-Halter oder Spiegel 15, gegenüber Temperaturänderungen empfindlich. Die thermische Ausdehnung der Komponenten führt zu Verformungen, die die Strahlüberlagerung beeinflussen und wodurch in der Folge Farbränder entstehen können. Eine homogene Modultemperatur ist also nicht nur für die Laser vorteilhaft, sondern erhöht die Stabilität des gesamten Systems.

Der Einsatz einer TEC-Kühlung erzeugt im Allgemeinen große Temperaturgradienten. Um dies zu verhindern, sollten sowohl der Gusskörper 10 als auch das optische System bestimmte Voraussetzungen erfüllen:
- die laterale Wärmeleitfähigkeit des Gusskörpers beziehungsweise Gehäuses 10 sollte vom Wert her groß und von der Verteilung her symmetrisch sein. Dies wird durch entsprechende Wärmeleitrippen innerhalb und außerhalb des Gehäuses erzielt, die gleichzeitig auch für eine hohe mechanische Steifigkeit sorgen.
- das optische System sollte symmetrisch um die Wärmequelle(n) angeordnet sein.
- Die Anordnung der TECs sollte der Symmetrie der tatsächlichen Wärmeleitfähigkeit Rechnung tragen.

In dem Optikmodul können mehrere Temperatursensoren für die Temperaturregelung verteilt werden. Diese Sensoren sollten vorteilhafterweise in der Nähe der Kühlelemente angeordnet werden, da auf Grund der trägen Reaktion dieser Elemente hier das aussagekräftigste Temperaturmaß ermittelt werden kann. Befinden sich jedoch die wichtigsten optischen Komponenten auf isothermen Flächen, so kann der Einsatz eines einzigen Temperatursensors auf einer geeigneten isothermen Fläche genügen.

Die Kühlung beziehungsweise Heizung des Optikmoduls durch Wärmeleitung von und zu den Peltier-Elementen kann auch durch andere Wärmetransportmechanismen ergänzt werden. So kann beispielsweise zusätzlich eine Heizung beziehungsweise Kühlung durch Konvektion im Inneren des Optikmoduls eingesetzt werden. Ebenso ist eine zusätzliche Temperierung der Optikmodule durch Wärmestrahler möglich.

Bei der oben geschilderten Ausführungsform wird die Temperierung mehr oder weniger zentral über das Gehäuse des Optikmoduls bewerkstelligt. Alternativ ist es jedoch auch denkbar, eine individuelle Temperierung von Gruppen aus mehreren Optik-Komponenten des Optikmoduls zu erreichen, in dem die jeweilige Komponentengruppe mittels Peltier-Elementen beheizt oder gekühlt wird.

## Patentansprüche

1. Optikmodul zum Belichten eines Bildaufnahmeelements mit
- mindestens einer zu heizenden und/oder zu kühlenden Lichtquellenein richtung (2, 3, 4),
- mindestens einer zu heizenden und/oder zu kühlenden Strahlformungseinrichtung (5 bis 9), die mit der mindestens einen Lichtquelleneinrichtung (2, 3, 4) in optischem Kontakt steht, und
- einer mit der mindestens einen Lichtquelleneinrichtung (2, 3, 4) und der mindestens einen Strahlformungseinrichtung (5 bis 9) in Wärmetransportverbindung stehenden Wärmetransporteinrichtung (11, 13, 14),
**dadurch gekennzeichnet, dass** die Wärmetransporteinrichtung eine Wärmepumpeneinrichtung (14) umfasst.

2. Optikmodul zum Belichten eines Bildaufnahmeelements mit
- einem wärmeleitfähigen Gehäuse (10),
- mindestens einer zu heizenden und/oder zu kühlenden Optikeinrichtung (2 bis 9), die in dem Gehäuse (10) angeordnet ist und mit diesem in Wärmetransportverbindung steht, und
- einer mit dem Gehäuse (10) in Wärmetransportverbindung stehenden Wärmetransporteinrichtung (11, 13, 14), mit der die mindestens eine Optikeinrichtung (2 bis 9) über das Gehäuse (10) indirekt heizbar und/oder kühlbar ist,
**dadurch gekennzeichnet, dass** die Wärmetransporteinrichtung (11, 13, 14) eine Wärmepumpeneinrichtung (14) umfasst.

3. Optikmodul nach Anspruch 1 oder 2, wobei die Wärmepumpeneinrichtung (14) nach einem thermoelektrischen Prinzip betreibbar ist.

4. Optikmodul nach Anspruch 3, wobei die Wärmepumpeneinrichtung (14) eines oder mehrere Peltier-Elemente umfasst.

5. Optikmodul nach einem der Ansprüche 1 bis 4, wobei eine Wärmeleitungsverbindung zwischen der zu kühlenden und/oder zu heizenden Einrichtung (2 bis 9) und der Wärmepumpe besteht.

6. Optikmodul nach einem der Ansprüche 1 bis 5, wobei die Wärmetransporteinrichtung (11, 13, 14) eine Regeleinrichtung zum Regeln der Temperatur der zu kühlenden und/oder zu heizenden Einrichtung (2 bis 9) umfasst.

7. Optikmodul nach einem der Ansprüche 1 bis 6, wobei Komponenten der Wärmepumpeneinrichtung (14) in dem Optikmodul (1) derart verteilt sind, dass in dem Optikmodul (1) isotherme Bereiche erzielbar sind.

8. Optikmodul nach einem der Ansprüche 1 bis 7, wobei jede der mindestens einen Lichtquelleneinrichtungen (2, 3, 4) jeweils einen Laser umfasst.

9. Optikmodul nach einem der Ansprüche 1 bis 8, wobei die Strahlformungseinrichtung (5 bis 9) einen Polygonspiegel (8) umfasst.

10. Verfahren zum Betreiben eines Optikmoduls (1) mit mindestens einer zu heizenden und/oder zu kühlenden Lichtquelleneinrichtung (2, 3, 4) und mindestens einer zu heizenden und/oder zu kühlenden Strahlformungseinrichtung (5 bis 9), die mit der mindestens einen Lichtquelleneinrichtung (2, 3, 4) in optischem Kontakt steht für ein Belichten eines Bildaufnahmeelements durch Transportieren von Wärme gemeinsam zu der mindestens einen Lichtquelleneinrichtung (2, 3, 4) und mindestens einen Strahlformungseinrichtung (5 bis 9) hin oder von ihnen weg, **dadurch gekennzeichnet, dass** das Transportieren der Wärme aktiv durch eine Wärmepumpe (8) unterstützt wird.

11. Verfahren zum Betreiben eines Optikmoduls (1) mit einem wärmeleitfähigen Gehäuse (10) und mindestens einer zu heizenden und/oder zu kühlenden Optikeinrichtung (2 bis 9), die in dem Gehäuse (10) angeordnet ist und mit diesem in Wärmetransportverbindung steht, für ein Belichten eines Bildaufnahmeelements durch Transportieren von Wärme zu dem Gehäuse (10) hin oder von ihm weg, so dass die mindestens eine Optikeinrichtung (2 bis 9) über das Gehäuse (10) indirekt geheizt und/oder gekühlt wird, **dadurch gekennzeichnet, dass** das Transportieren der Wärme aktiv durch eine Wärmepumpeneinrichtung (14) unterstützt wird.

12. Verfahren nach Anspruch 10 oder 11, wobei die Wärmepumpeneinrichtung (14) nach einem thermoelektrischen Prinzip arbeitet.

13. Verfahren nach einem der Ansprüche 10 bis 12, wobei die zu heizende(n) oder kühlende(n) Einrichtung(en) (2 bis 9) zeitlich auf im Wesentlichen konstante Temperatur geregelt wird (werden).

14. Verfahren nach einem der Ansprüche 8 bis 11, wobei Bereiche des Optikmoduls (1) isotherm gehalten werden.
